# EUROPEAN PATENT APPLICATION

(11) **EP 2 645 515 A2**
(43) Date of publication of application: **02.10.2013**
(21) Application number: 13155698.7
(22) Date of filing: 19.02.2013
(51) Int. Cl.: H02J 3/14, H02J 3/38

(54) **Battery system**

(30) Priority: 30.03.2012 JP 2012078799
(71) Applicant: Hitachi Ltd., Tokyo 100-8280 (JP)
(72) Inventor: Takeda, Kenji, Tokyo 100-8220 (JP)
(74) Representative: MERH-IP Matias Erny Reichl Hoffmann

(57) **Abstract**

A battery system is provided in which generated surplus power is efficiently used and stable power can be supplied to an electrical system. The battery system includes plural battery modules (30) each including plural battery cells (20), a resistor (4), a cooler (5) to cool the plural battery modules (30), and a control unit (230) to control currents flowing through the cooler (5) and the resistor (4). The control unit (230) increases power consumption of the cooler (5) and further increases power consumption of the resistor (4) if a state of charge of the battery system (201) is equal to or more than an upper limit value of a usable state of charge, and power is charged to the battery system (201).

## Description

### TECHNICAL FIELD

The present invention relates to a battery system using a lithium-ion battery.

### BACKGROUND ART

A system using natural and renewable energy, such as wind power or solar light, is developed from a demand for resource saving or CO₂ reduction. Since these natural energies increase or decrease depending on various conditions, the output powers thereof fluctuate. In recent years, a system is developed in which an energy storage system for reducing these fluctuations is added to the system using the natural energy.

On the other hand, when the state of charge of the battery system is a state of full charge, control is performed to decrease the power generation amount of the power generating system, and control is performed to prevent surplus power from being generated. When such control is performed, power which can be originally generated is wasted, and accordingly, the control is not preferable from the viewpoint of power generation efficiency.

JP-A-2011-61920 discloses a control in which, in a hybrid vehicle mounted with a small battery system, surplus power is used for a cooler and power use efficiency is improved.

In the hybrid vehicle as disclosed in JP-A-2011-61920, when an engine is stopped, excessive power generation can be prevented. However, in a large power generating system, a power generating equipment can not be easily stopped, and when the generated power is excessive, it is difficult to suppress power generation of the power generating equipment and to absorb the excessive generated power.

Besides, since a battery system added to a large power generating equipment is required to keep the stability of an electrical system, each of power plants is required to have a system to strictly manage the power fluctuation suppression. For example, a case is conceivable in which if the fluctuation of power plant output deviates from a regulated range, some punishment is applied.

### SUMMARY OF INVENTION

The invention is made in view of the above problem, and has an object to provide a battery system in which generated surplus power is efficiently used and stable power can be supplied to an electrical system.

In order to achieve the object, according to an aspect of the invention, a battery system includes plural battery modules each including plural battery cells, a resistor, a cooler to cool the plural battery modules, and/or a control unit to control currents flowing through the cooler and the resistor, and the control unit increases power consumption of the cooler and further increases power consumption of the resistor if a state of charge of the battery system is equal to or more than an upper limit value of a usable state of charge, and power is charged to the battery system.

According to the aspect of the invention, the battery system can be provided in which generated surplus power is efficiently used and stable power can be supplied to an electrical system.

### BRIEF DESCRIPTION OF DRAWINGS

FIG. 1 is a view showing a power generating system according to the invention.
FIG. 2 is a block diagram showing a battery system 201 according to the invention.
FIG. 3 is a circuit diagram showing a battery module 30 according to the invention.
FIG. 4 is a circuit diagram showing the battery system 201 according to the invention.
FIG. 5 is a view showing power supply to a battery block 50 according to the invention.
FIG. 6 is a view showing a relation between power consumption of a cooler 5 and power consumption of a resistor 4 according to the invention.
FIG. 7 is a view showing a logic circuit of power distribution according to the invention.
FIG. 8 is a view showing a flowchart of power distribution according to the invention.
FIG. 9 is a perspective view of a battery pack 40 according to the invention.
FIG. 10 is a view showing a logic circuit of power distribution according to a second embodiment of the invention.
FIG. 11 is a circuit diagram showing a battery pack control unit 230 according to the second embodiment of the invention.
FIG. 12 is a view showing a structure of a battery system 201 according to a third embodiment of the invention.

### DESCRIPTION OF EMBODIMENTS

### First Embodiment

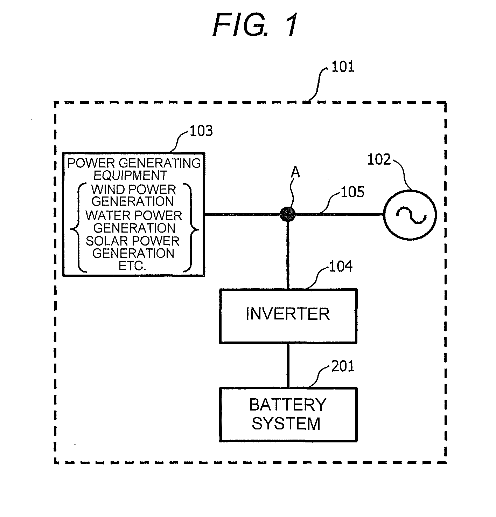

Hereinafter, embodiments of the invention will be described with reference to the drawings. First, a power generating system according to the invention will be described with reference to FIG. 1. A power generating system 101 includes a power generating equipment 103, an electrical system 102, an electric wire 105 to connect the electrical system 102 and the power generating equipment 103, and a battery system 201 connected to the electric wire 105 through an inverter 104. The power generating equipment 103 is, for example, a power generating facility such as a wind power generating facility, a water power generating facility or a solar power generating facility.

When the power generating equipment 103 excessively generates power larger than power required in the electrical system 102, the battery system 201 charges the excessively generated power, and when the power generating equipment 103 generates power lower than the power required in the electrical system 102, the battery system discharges, so that stable supply of power is realized. Incidentally, when the battery system 201 charges and discharges, the inverter 104 performs AC-DC and DC-AC conversion, and reception and supply of power is performed.

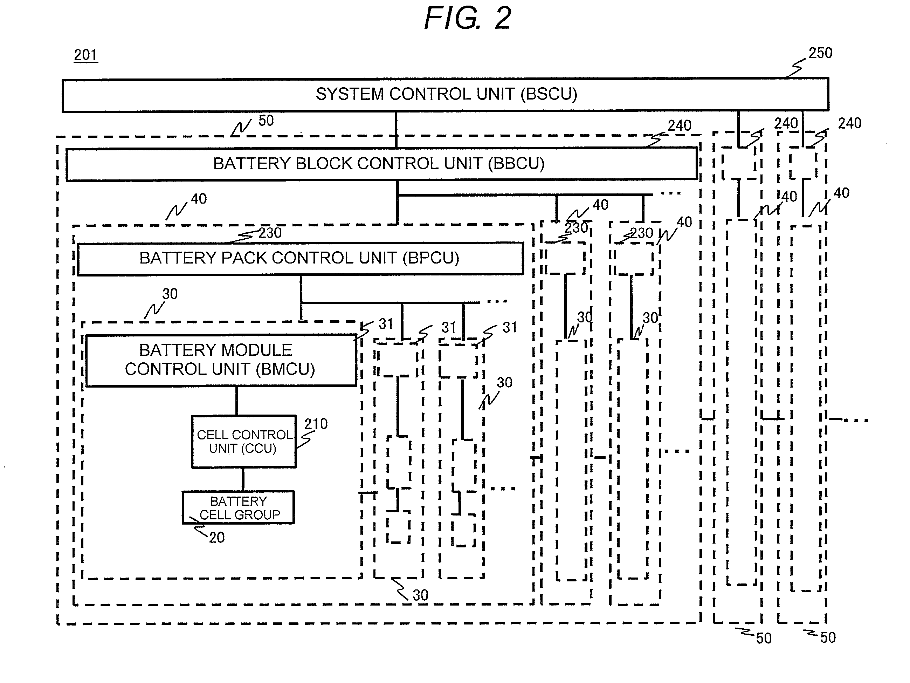

FIG. 2 shows a block diagram of the battery system 201. The battery system 201 according to the invention includes a battery module 30 as a minimum unit, battery packs 40 each including the plural battery modules 30, and battery blocks 50 each including the plural battery packs 40.

First, a structure of the battery module 30 will be specifically described. The battery module 30 includes battery cell groups 20 including plural battery cells Bnx (n denotes the number of battery cells connected in series in the battery module 30, and x denotes the number of battery cells connected in parallel in one battery cell group) , a cell control unit (CCU) 210 for collecting battery information (for example, current information, voltage information, temperature information, state of charge and the like of the battery cells) of the battery cell groups 20, and a battery module control unit (BMCU) 31. Incidentally, the cell control unit 210 performs also balancing control between the battery cells. The battery information collected by the cell control unit 210 is sent to the battery module control unit (BMCU) 31. The battery module control unit (BMCU) 31 calculates an average state of charge of the battery cell groups 20 in the battery module 30, adds the battery information of the average state of charge of the battery cell groups 20 to the battery information mentioned before, and transmits the battery information to a host battery pack control unit (BPCU) 230.

The battery pack 40 includes the plural battery modules 30 and the battery pack control unit 230. The battery pack control unit 230 collects the battery information outputted from each of the battery module control units 31, and calculate information of an average state of charge of the battery modules 30 by averaging the states of charge of the battery modules 30 in the battery pack 40. The battery pack control unit 230 adds the information of the average state of charge of the plural battery modules 30 to the battery information obtained from the battery module control unit 31 and outputs the battery information to a host battery block control unit 240.

The battery block 50 includes the plural battery packs 40 and the battery block control unit 240. The battery block control unit 240 collects the battery information outputted from each of the battery pack control units 230, and calculates information of an average state of charge of the battery packs 40 by averaging the states of charge of the battery packs 40 in the battery block 50. The battery block control unit 240 adds the information of the average state of charge of the plural battery packs 40 to the battery information obtained from the battery pack control unit 230, and outputs the battery information to a host system control unit 250. Incidentally, in the description, although the battery block 50 includes the plural battery packs 40, the number of the battery packs 40 constituting the battery block 50 may be one. In that case, the battery block control unit 240 directly outputs the battery information outputted from the battery pack control unit 230 to the system control unit 250.

In the invention, since the state of the battery is monitored in the plural hierarchies as described above, the battery system 201 has high safety. Besides, since the battery module 30, the battery pack 40, and the battery block 50 according to the invention can be replaced in each unit, the battery system has an excellent maintenance property.

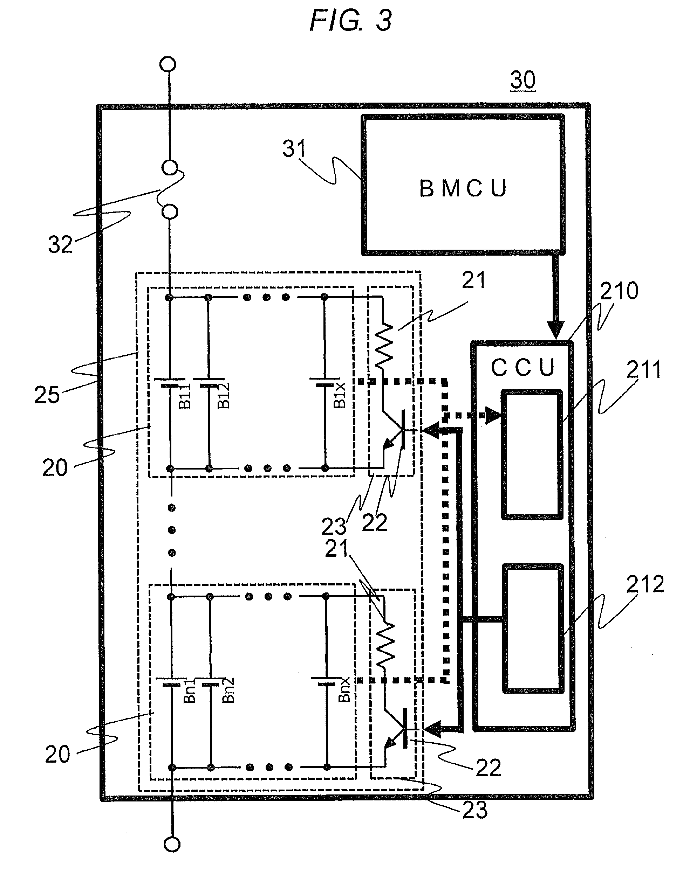

Next, a specific circuit structure of the battery module 30 will be described with reference to FIG. 3. The battery module 30 includes a power supply circuit 25 in which the plural battery cell groups 20 are connected in series, and a fuse 32 connected in series to the power supply circuit. The battery cell group 20 has a structure in which plural battery cells Bn1, Bn2 ••• BnX (n is a number larger than 1 and is the number of the battery cell groups 20 connected in series, X is the number of the cells) are connected in parallel. Besides, a series circuit 23 in which a resistance element 21 and a switch element 22 are connected in series is connected in parallel to the battery cell group 20. The resistance element 21 and the switch element 22 are for performing balancing between the battery cells B11, B12 ••• B1X when fluctuation occurs in the voltage or state of charge between the battery cells B11, B12 ••• B1X.

A battery information acquisition part 211 provided in the cell control unit 210 acquires battery information of the respective battery cells Bn1, Bn2 ••• BnX, and the cell control unit 210 outputs the battery information to the battery module control unit 31. The battery module control unit 31 calculates the states of charge (SOC) of the respective battery cells based on the battery information outputted from the cell control unit 210, and outputs the information of the states of charge to the cell control unit 210. The cell control unit 210 receives the information of the states of charge, and when a difference between the states of charge of the battery cells Bn1, Bn2 ••• BnX of the power supply circuit 25 monitored by the cell control unit 210 becomes 10% or more, a switch element control part 212 provided in the cell control unit 210 outputs a signal to turn on the switch element 22, and balancing between the respective battery cells Bn1, Bn2 ••• BnX is performed.

Incidentally, in this embodiment, it is assumed that the battery cells Bn1, Bn2 ••• BnX are lithium-ion batteries. However, a nickel metal hydride (Ni-HM) battery, a nickel-cadmium battery, a lead acid battery, a redox flow battery, a sodium-sulfur battery or the like may be used according to a purpose.

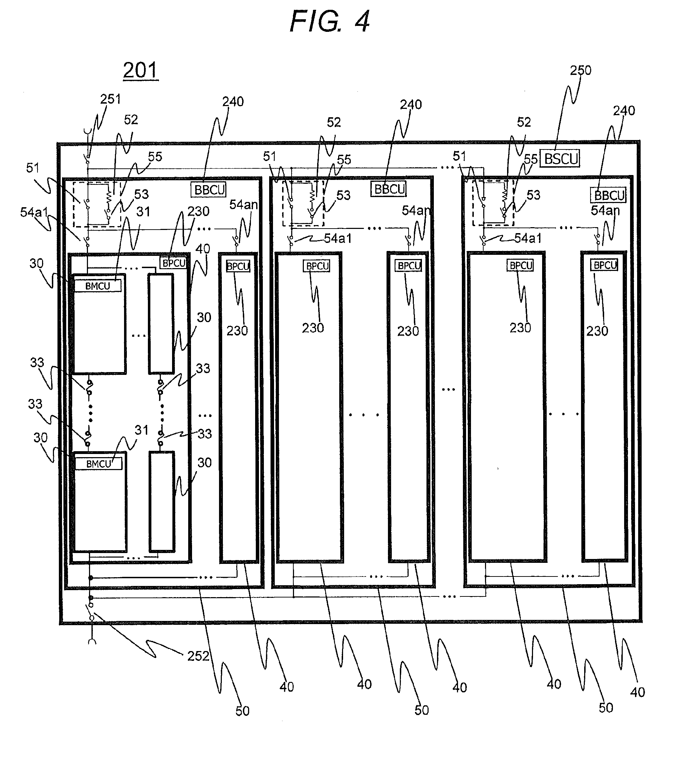

Next, a circuit structure of the battery system 201 will be described with reference to FIG. 4. FIG. 4 is a view showing the battery system 201 in which the plural battery blocks 50 each including the battery packs 40 each including the plural battery modules 30 are connected in parallel.

First, a structure of the battery block 50 will be described. The battery block 50 includes the battery packs 40 and a precharge circuit 55 connected in series to the battery packs 40. Besides, the battery blocks 50 are connected in parallel to each other, are connected to a positive electrode side of the inverter 104 through a switching body 251, and are connected to a negative electrode side of the inverter 104 through a switching body 252.

The precharge circuit 55 includes a switch element 51, a resistance element 52 connected in parallel to the switch element 51, and a switch element 53. If there is a fluctuation in state of charge or voltage among the battery blocks 50, the precharge circuit 55 turns off the switch body 251 and the switch body 252, and further keeps, for a while, a period in which the switch element 51 is in an off state and the switch element 53 is in an on state. As a result, the fluctuation in the state of charge or the voltage among the battery blocks 50 can be reduced by using a cross current.

Besides, the battery block 50 includes switch elements 54a1 (54a), 54a2 (54a) ••• 54an (54a) (n is the number of the parallel-connected battery packs 40 in the battery block 50) connected in series to the respective battery packs 40. When a problem arises in a battery pack 40, the switch element 54a corresponding to the problematic battery pack 40 is turned off, so that the battery pack can be isolated from the other battery packs 40. Besides, according to the structure as stated above, also at the time of maintenance, an overvoltage can be prevented from being applied to the battery pack 40 by turning off the switch element 54a. Accordingly, the safety of work is ensured at the time of maintenance of the battery pack 40, and double protection becomes possible by fuses 32 and 33 in the whole battery system, and accordingly, the safety and the maintenance property are further improved.

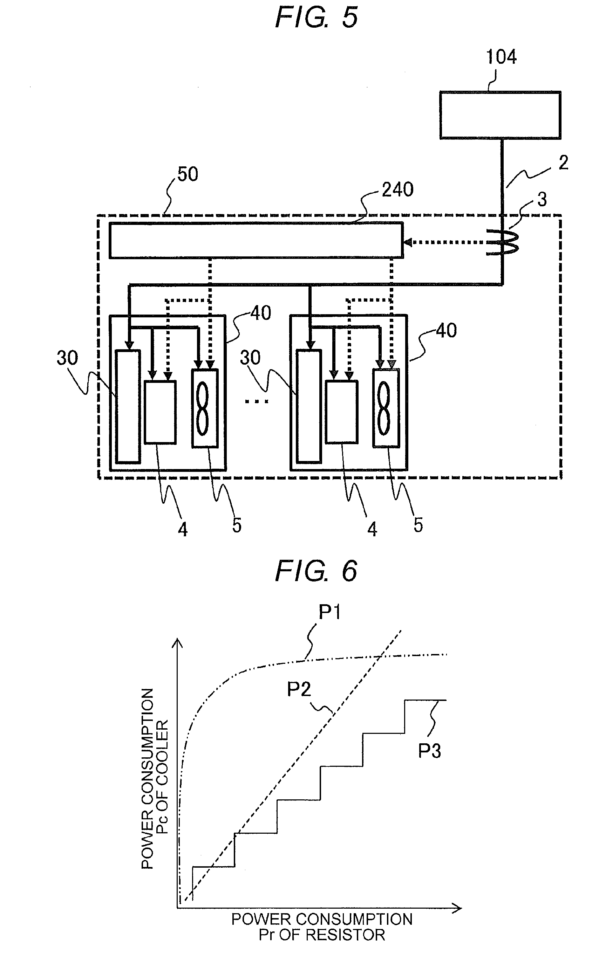

Next, a method of consuming surplus generated power when the respective battery blocks 50 are in a state of full charge in the battery system 201 will be described with reference to FIG. 5. In this embodiment, as shown in FIG. 5, the surplus power is consumed by a cooler 5 and a resistor 4 provided in each of the battery packs 40 constituting the battery block 50 connected to the inverter 104. Specifically, the resistor 4 and the cooler 5 are connected to the power generating equipment 103 through a power line 3, and can directly consume the generated power.

Incidentally, here, although the cooler 5 is a fan, instead of the fan, a blower, a pump, a thermal cycle using a compressor, an absorption-type refrigerator, or a peltier element may be used, and the cooler has only to be a heat transport or cooling system using electric power as its main motive power.

On the other hand, the resistor 4 is, for example, a heater for converting power into heat, and is constructed to switch energization to the heater by a mechanical relay or a semiconductor switch element. Incidentally, in this embodiment, although the resistor 4 is newly provided in the battery pack 40, a resistance element formed in the battery pack 40 may be simply used. An example in which the resistance element formed in the battery pack 40 is used will be separately described in a second embodiment.

The battery block control unit 240 performs power distribution to the respective resistors 4 and the respective coolers 5 based on current flowing through a power input/output line 2 to which the inverter 104 and the battery packs 40 are connected. The current flowing through the power input/output line 2 is measured by a current detector 3 provided in the power input/output line 2, and the current information is outputted to the battery block control unit 240. Incidentally, the current detector 3 is a shunt resistor or a hole element.

Next, a method of distributing, by the battery block control unit 240, power to the respective resistors 4 and the respective coolers 5 will be described with reference to FIG. 6. FIG. 6 is a view in which the vertical axis indicates the total power consumption Pc of the respective coolers 5 constituting the battery block 50 per unit time, and the horizontal axis indicates the total power consumption Pr of the respective resistors 4 constituting the battery block 50 per unit time, and is a graph showing a relation between the power consumption Pc of the coolers 5 and the power consumption Pr of the resistors 4.

First, a power consumption pattern P1 will be described. The power consumption pattern P1 is such that the power consumption Pc of the coolers 5 is first quickly raised, and when the coolers 5 can not absorb the generated surplus power, the power consumption Pr of the resistors 4 is raised. In other words, an increase amount of the power consumption Pc consumed by the coolers 5 is larger than an increase amount of the power consumption Pr consumed by the resistors 4.

Since each of the battery modules 30 performs charging and discharging, the battery module is always in the heat generating state. Thus, by performing the control as stated above, the generation of surplus heat is prevented to the utmost, and the battery module can be cooled by using the generated surplus power. Accordingly, when the amount of power consumption is adjusted as indicated by the power consumption pattern P1, deterioration of the battery module 30 due to the temperature rise is prevented, and the generated surplus power can be used without waste. Thus, the battery system in which the generated surplus power is efficiently used can be provided.

Next, a power consumption pattern P2 will be described. The power consumption pattern P2 is a pattern in which the power consumption Pr of the resistors 4 and the power consumption Pc of the coolers 5 are simultaneously raised. By performing such control, when large surplus power is abruptly generated, the power can be instantly consumed. Accordingly, when the amount of power consumption is adjusted as indicated by the power consumption pattern P2, even when the power generating system is used as the power generating system using natural energy and having large power fluctuation, the generated surplus power can be prevented from being outputted to the electrical system 102. Accordingly, stable power supply becomes possible. Besides, it is preferable that the slope of P2 is 1 or more and the rising rate of the power consumption Pc on the cooler 5 side is large. By performing such control, the deterioration of the battery module 30 due to heat generation of the resistor 4 can be prevented.

Next, a power consumption pattern P3 will be described. The power consumption pattern P3 is such a control that only the power consumption Pc of the coolers 5 is first raised, and then, the temperatures of the respective battery modules 30 are measured, and when it is determined that there is no problem even if the resistors 4 generate heat, only the power consumption Pr of the resistors is raised. By performing such control, while the temperatures of the battery modules 30 are kept appropriate, the generated surplus power can be consumed. Accordingly, the battery system can be provided in which the deterioration of the respective battery modules 30 due to temperature rising and the generated surplus power are balanced.

Incidentally, as a feature common to the power consumption patterns P1 to P3, there is a feature that the graph of the power consumption Pc of the coolers 5 and the power consumption Pr of the resistors 4 rises right (or the slope is positive). By performing such control, the power consumption Pc of the coolers 5 and the power consumption Pr of the resistors can be balanced. Accordingly, the battery system can be provided in which the generated surplus power is efficiently used, and the deterioration of the battery is suppressed.

Incidentally, in this embodiment, although the resistor 4 and the cooler 5 are provided in the battery pack 40, the resistor 4 and the cooler 5 are provided in each of the battery blocks 50 and the control may be performed. In this case, since the battery block 50 itself is larger than the battery pack 40, the resistor 4 and the cooler 5 can also be made large. Thus, even when the battery system is used for the power generating system generating large surplus power that can not be consumed by a small resistor and a small cooler such as those in the battery pack 40, the surplus power can be used without waste.

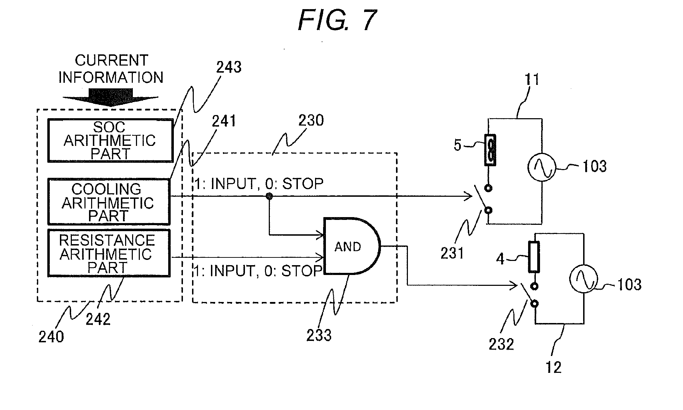

Further, a description will be made on a circuit for controlling the power consumption Pc of the coolers 5 and the power consumption Pr of the resistors 4 so as to become the power consumption shown in FIG. 6 with reference to FIG. 7.

First, current information detected by the current detector 3 is inputted to the battery block control unit 240. Thereafter, the current information and SOC information calculated by an SOC arithmetic part 243, which calculates the state of charge (SOC) of the battery pack 40 provided in the battery block 50, are inputted.

A cooling arithmetic part 241 and a resistance arithmetic part 242 are provided in the battery block control unit 240. The SOC information and the current information are inputted to the cooling arithmetic part 241, and when all the battery packs 40 in the battery block 50 are in a state of full charge, or the states of charge of all the battery packs 40 exceed an upper limit value of a usable state of charge (for example, when the upper limit of the usable state of charge is set to 80%, the SOC is 80% or more), the cooling arithmetic part 241 calculates the power consumption of the cooler 5. Then, the cooling arithmetic part 241 outputs a signal to turn on a switch element 231 which electrically connects or disconnects the power generating equipment 103 and the cooler 5. As a result, a cooler circuit 11 becomes a closed circuit, and the cooler 5 provided in the battery pack 40 is energized. Incidentally, finer control of the amount of energization is possible by using a not-shown current control unit (for example, an inverter-driven cooling device, a resistor circuit including a semiconductor switch, etc.).

On the other hand, when the states of charge of all the battery packs 40 are in a state of full charge, or the states of charge of all the battery packs 40 exceed an upper limit value of a usable state of charge, and the current value detected by the current detector 3 is a specified value or more (for example, when the upper limit of the usable state of charge is set to 80%, the SOC is 80% or more) , the resistance arithmetic part 242 places a switch element 232 provided in a resistor circuit 12 into a connected state and a closed circuit is formed. At this time, a signal that is outputted from the resistance arithmetic part 242 and turns on the switch element 232 passes through an AND circuit 233 provided in the battery pack control unit 230. The AND circuit 233 is constructed such that if neither the signal from the cooling arithmetic part 241 nor the signal from the resistance arithmetic part 242 is a signal to turn on, a signal is not outputted to the switch element 232. By adopting such structure, after the cooler 5 is first energized to increase the amount of power consumption, the power consumption of the resistor 4 can be increased. Accordingly, while heat generation by use of surplus power is suppressed, cooling efficiency can be improved. Accordingly, the power generating system can be provided in which the generated surplus power is efficiently used.

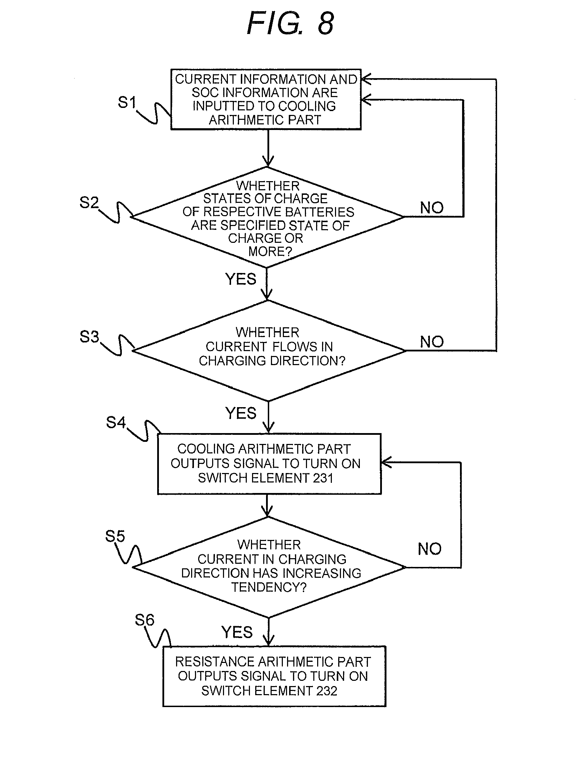

Next, an example of the control of this embodiment will be described with reference to a flowchart of FIG. 8. First, at step S1, the current information and the SOC information are inputted to the cooling arithmetic part 241. At step S2, it is determined whether the states of charge of the respective battery packs are a specified state of charge or more. Incidentally, the specified state of charge here means that all the battery packs 40 are in the state of full charge or the states of charge of all the battery packs 40 exceed the usable state of charge (for example, when the upper limit of the usable state of charge is set to 80%, the SOC is 80% or more). Here, if the state of charge is not more than the specified state of charge, return is made to step A1, and step S1 and step S2 are repeated. On the other hand, if the state of charge is the specified state of charge or more, advance is made to step S3, and it is determined whether the current is in a charging direction or in a discharging direction. When the current is in the discharging direction, return is made to step S1, and step S1 to step S3 are repeated. On the other hand, when it is determined at step S3 that the current flows in the charging direction, advance is made to step S4, and the cooling arithmetic part 242 outputs the signal to turn on the switch element 231.

Thereafter, advance is made to step S5, and it is determined whether the charge current has an increasing tendency. When the charge current is not in the increasing direction, return is made to step S4, the on state of the switch element 231 is kept, and only the cooler 5 consumes the power. On the other hand, when the charge current is in the increasing direction, advance is made to step S6, and the resistance arithmetic part 242 outputs the signal to turn on the switch element 232.

The control is specifically performed by repeating step S1 to step S6 in this way.

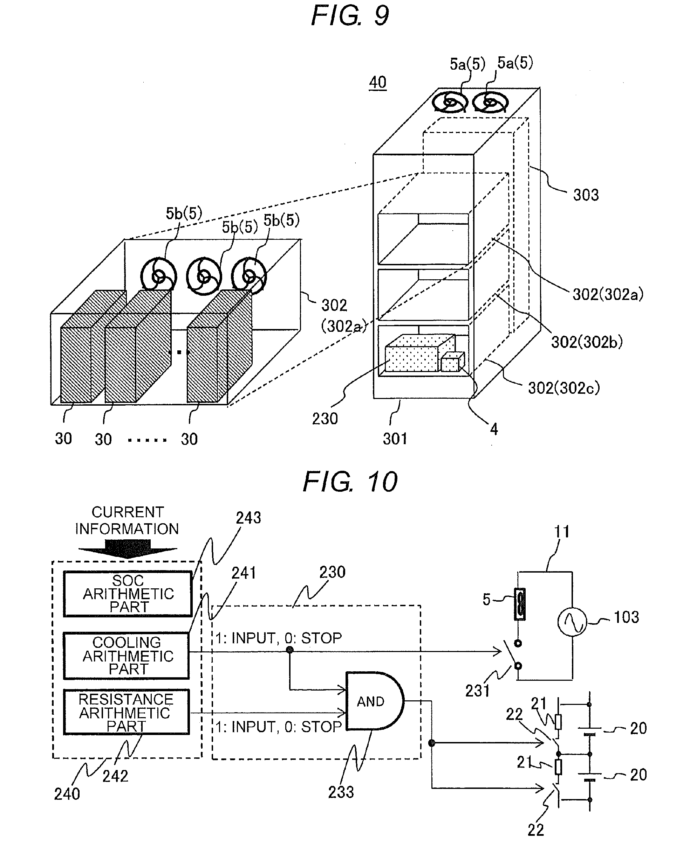

Finally, a specific structure of the battery pack 40 will be described with reference to FIG. 9. The battery pack 40 includes the plural battery modules 30, the battery pack control unit 230 to control the plural battery modules 30, and a battery rack 301 to contain the battery pack control unit 230 and the battery modules 30. The battery rack 301 includes plural battery sub-racks 302 (302a, 302b, 302c), and the plural battery modules 30 are contained in each of the battery sub-racks 302. Besides, the battery rack 301 includes an air passage 303 provided on the back parts of the battery sub-racks 302, and includes fans 5a (5) provided on the upper part of the air passage 303.

On the other hand, individual fans 5b (5) are provided on the back part of the battery sub-rack 302, and air can be made to flow through the air passage 303. When generated surplus power is generated, the control is performed to increase the power consumption Pc of the fans 5a and the individual fans 5b. Besides, in this embodiment, the battery sub-rack 302c is provided with the battery pack control unit 230 and the resistor 4. Incidentally, in this embodiment, although the resistor 4 is provided in the lowermost battery sub-rack 302, the resistor 4 is preferably provided in the uppermost battery sub-rack 302 from the viewpoint of preventing heat from influencing the battery modules 30.

As described above, when the battery system of the embodiment is used, the generated surplus power can be appropriately distributed to the coolers and the resistors. Accordingly, the battery system can be provided in which the power outputted to the electrical system is stabilized while the generated surplus power is efficiently used, and further, deterioration of the battery is suppressed.

### Second Embodiment

FIG. 10 shows a second embodiment of the invention. Components similar to those of the first embodiment are denoted by the same reference numerals as the first embodiment. Specifically, a point different from the first embodiment is that the resistor 4 is not newly provided, but the resistance elements 21 provided in the battery module 30 and used for balancing are used to consume surplus power.

FIG. 10 is a view showing a logic circuit of the second embodiment, and a point different from the first embodiment will be mainly described. In this embodiment, the resistance elements 21 provided in the battery module 30 are used as a resistor. Although it is the same as the first embodiment that a resistance arithmetic part 242 outputs a signal to turn on a switch element, the signal is outputted to switch elements 22 in the battery module 30.

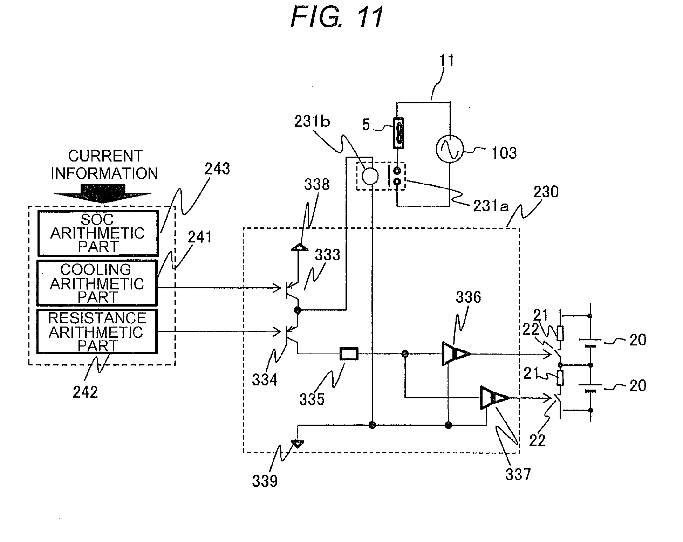

FIG. 11 is a view showing a specific circuit. A circuit of a battery pack control unit 230 is a circuit electrically constructed between a high potential side terminal 338 and a low potential side terminal 339. Incidentally, the high potential side terminal is fixed at a potential V1, and the low potential side terminal is fixed at a potential 0 V. Besides, as a more specific example, the potential V1 is fixed at 5 V.

One end of a switch element 333 is connected to the high potential side terminal 338, and one end of a switch element 334 is connected to the other end of the switch element 333. Besides, the other end side of the switch element 334 is connected to the low potential side terminal 339 through insulated elements 336 and 337. Incidentally, the insulated element here means an element, such as a photocoupler, capable of performing communication while keeping insulation from each other. Besides, a resistance element 335 to prevent breakage of the insulated elements 336 and 337 is provided between the other end of the switch element 334 and the insulated elements 336 and 337.

An electrical connection point between the switch elements 333 and 334 is electrically connected to one end of an electromagnetic control unit 231b to control on/off of a switch element 231a, and the other end of the electromagnetic control unit 231b is connected to the low potential side terminal 339. By adopting the structure as stated above, when the switch element 333 is turned on, the cooler 5 can be driven. Besides, the switch element 333 and the switch element 334 are connected in series to each other, so that the AND circuit is formed, and if the switch element 333 is not in the on state, the signal to turn on the switch elements 22 is not outputted to the insulated elements 336 and 337. By adopting the structure as stated above, the battery system can be provided in which the generated surplus power is efficiently used even if a resistor to generate heat is not newly provided, and the deterioration of the battery is suppressed. That is, in addition to the effects of the first embodiment, there are effects that the number of parts can be reduced, and the system can be miniaturized.

Further, as shown in FIG. 11, when the structure is made such that the insulated elements 336 and 337 are connected in parallel to each other, all the switch elements 22 provided in the battery module 30 can be simultaneously turned on, and accordingly, the case where the generated power is abruptly increased can be dealt with.

### Third Embodiment

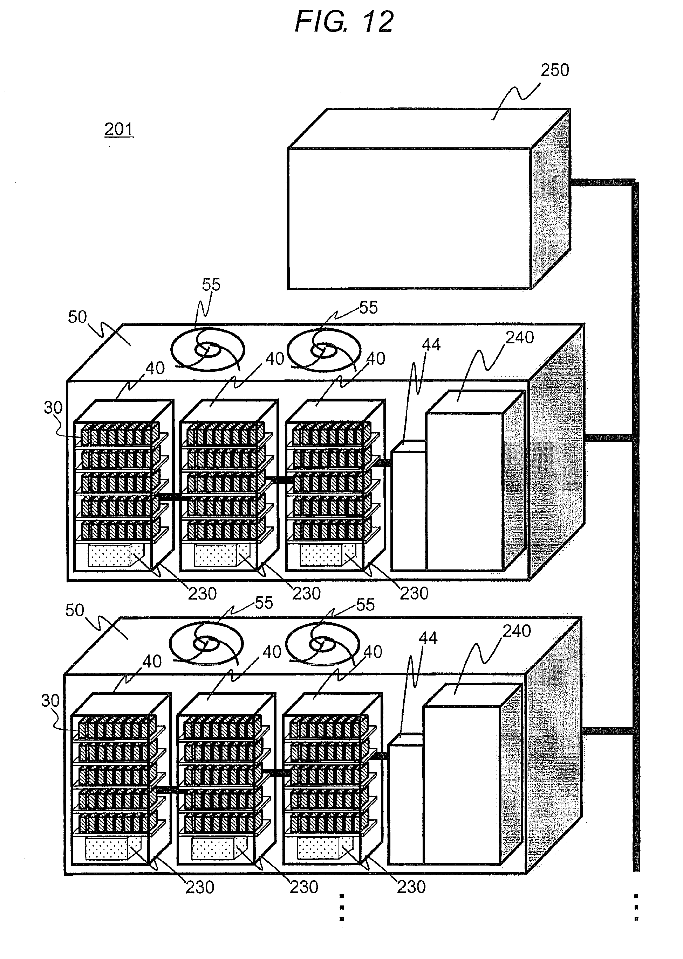

FIG. 12 shows a third embodiment of the invention. Components similar to those of the first embodiment are denoted by the same reference numerals as the first embodiment. Specifically, a point different from the first embodiment is that the functions of the cooling arithmetic part 241 and the resistance arithmetic part 242 are moved to a battery system control unit, and a large cooler 55 and a large resistor 44 are provided in each of battery blocks 50.

FIG. 12 is a structural view of a battery system 201. Specifically, each of the battery blocks 50 is provided with the large cooler 55 and the large resistor 44. By adopting the structure as stated above, the large cooler 55 and the large resistor 44 can consume higher power. Accordingly, even if large generated surplus power is generated, the cooler 55 and the resistor 44 can sufficiently consume the surplus power. Accordingly, the battery system can be provided in which stable power can be supplied to the electrical system even if large surplus power is abruptly generated.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A battery system comprising:
a plurality of battery modules (30) each including a plurality of battery cells (20);
a resistor (4);
a cooler (5) to cool the plurality of battery modules (30); and
a control unit (230) to control currents flowing through the cooler (5) and the resistor (4), wherein
the control unit (230) increases power consumption of the cooler (5) and further increases power consumption of the resistor (4) if a state of charge of the battery system (201) is equal to or more than an upper limit value of a usable state of charge, and power is charged to the battery system (201).

2. The battery system according to claim 1, wherein an amount of increase of the power consumption of the cooler (5) is larger than an amount of increase of the power consumption of the resistor (4).

3. The battery system according to claim 1 or 2, wherein
the resistor (4) constitutes a series circuit in which a switch element (22) is connected in series, and
the series circuit is connected in parallel to each of the battery cells (20).

4. The battery system according to claim 3, wherein the control unit (230) increases the power consumption of the resistor (4) by turning on the switch element (22) connected to the resistor (4).

5. The battery system according to at least one of claims 1 to 4, wherein the cooler (5) is a fan (5a; 5b).

6. The battery system according to at least one of claims 1 to 5, wherein
a switch element (22) is connected to the fan (5), and
the control unit (230) increases the power consumption of the cooler (5) by turning on the switch element (22) connected to the fan (5).

7. The battery system according to claim 6, wherein the switch element (22) connected to the resistor (4) is turned on only when the switch element (22) connected to the cooler (5) is in an on state.

8. The battery system according to any one of claims 1 to 7, wherein the upper limit value of the usable state of charge is 80%.
